# DEMANDE DE BREVET EUROPEEN

(11) **EP 0 800 300 A1**
(43) Date de publication de la demande: **08.10.1997**
(21) Numéro de dépôt: 97400287.5
(22) Date de dépôt: 07.02.1997
(51) Int. Cl.: H04L 29/06

(54) **Vérification d'intégrité des réquêtes dans un réseau client serveur**

(30) Priorité: 12.02.1996 FR 9601652
(71) Demandeur: BULL S.A., 78430 Louveciennes (FR)
(72) Inventeur: Pinkas, Denis, 92370 Chaville (FR)
(74) Mandataire: Debay, Yves

(57) **Abrégé**

La présente invention concerne un procédé de vérification de la conservation de l'intégrité d'une requête émise sans protection par un client anonyme vers un serveur, une seule clé publique étant utilisée, celle du serveur. Ce procédé est remarquable en ce que le client anonyme émet ensemble avec sa requête d'une part un drapeau qui spécifie si le serveur doit ou ne doit pas offrir une garantie absolue de non-répétition des requêtes reçues et d'autre part un nombre unique, c'est-à-dire ne se répétant jamais ou ayant une probabilité infime de répétition, consistant, soit en un nombre aléatoire avec une probabilité infime de répétition soit en la concaténation d'une indication de temps et d'un nombre aléatoire avec une certitude de non-répétition, la vérification de ladite intégrité étant alors réalisée lors de la réception de la réponse à la requête, la réponse globale incluant pour cela la réponse à la requête mais aussi le résultat d'une fonction de compression non inversible appliquée à l'ensemble requête, drapeau et nombre unique, la réponse globale étant en outre protégée en intégrité soit au moyen de la clé publique du serveur utilisée comme clé de signature, soit au moyen d'une clé secrète établie à l'aide de la clé publique du serveur utilisée comme clé de chiffrement.

## Description

La présente invention concerne un procédé de vérification de la conservation de l'intégrité d'une requête émise sans protection par un client vers un serveur, une seule clé de signature étant utilisée, celle du serveur.

De manière connue, le modèle client-serveur est un modèle informatique asymétrique constitué de deux entités séparées et logiques, l'une, le client, opérant de manière frontale et l'autre, le serveur, travaillant en "arrière-plan", ces deux entités agissant en coopération. Ainsi, le client émet des requêtes pour obtenir des informations ou des actions que le serveur peut exécuter plus spécifiquement ou dans de meilleures conditions, ce dernier répondant ensuite aux requêtes émises par le client. Généralement, le serveur n'exécute que des tâches lourdes et spécialisées qui sont communes à plusieurs clients, qui peuvent demander une puissance de traitement importante, qui exigent des données communes à plusieurs clients et nécessitent un contrôle unique.

Dans ce contexte, en informatique et notamment avec les réseaux complexes de systèmes distribués, il apparaît indispensable de prévoir et organiser des services permettant d'assurer la sécurité de l'environnement réparti. En effet, utiliser une informatique ouverte et distribuée présente d'énormes avantages puisqu'il est alors permis à un client, c'est-à-dire l'utilisateur d'une interface, d'accéder aux différentes données de tels systèmes quelle que soit la situation géographique dudit utilisateur et quelle que soit le système sur lequel résident les données. Cependant, si l'utilisateur désire profiter de ces avantages, il souhaite également, que certaines données, considérées comme confidentielles ou critiques, soient protégées et que leur accès ne soit autorisé qu'à certains utilisateurs de même qu'il désire que toute modification intempestive des données stockées soit empêchée ou des données transmises soit détectée pour pouvoir utiliser en toute confiance les données reçues, leur intégrité étant conservée. En pratique, les services de sécurité, en particulier en informatique distribuée, sont composés de fonctions complétant celles fournies par les plates-formes ou applications individuelles telles le contrôle d'accès, l'audit, l'intégrité et l'authentification de l'origine des données concernant les demandes et les réponses des utilisateurs.

Pour cela, différents mécanismes, et par exemple le code MAC (Code d'Authentification de Message), peuvent être utilisés pour garantir l'intégrité pendant les échanges de données intervenant dans le réseau. De manière courante, lorsque la protection de l'intégrité d'une requête est désirée être assurée, il est utilisé une clé qui peut être, soit une clé de signature permettant de produire une signature dite "numérique", soit une clé de scellement permettant de produire un sceau. La signature "numérique" a pour objet d'identifier clairement l'utilisateur signataire en interdisant toute altération ou contrefaçon des données transmises. Cette signature doit être persistante, c'est-à-dire qu'elle est figée non pour le temps d'une connexion mais pour la durée de vie d'un document. La clé de scellement est utilisée pour produire un sceau attestant que les données reçues n'ont subi aucune modification accidentelle ou intentionnelle.

De cette manière, lorsque, par exemple, un client A émet une requête vers un serveur B, cette requête est signée et donc son intégrité est protégée au moyen d'une clé de signature propre au client A alors que la réponse du serveur B est protégée au moyen d'une clé de signature propre au serveur B, A et B devant ainsi posséder chacun au moins une clé de signature. Un premier inconvénient présenté par cette technique est inhérent au fait qu'un client ne possède pas toujours une telle clé ou que son utilisation dans certains cas apparaît excessivement lourde. En effet, utiliser une technique de protection d'intégrité directe sur la requête comme par exemple une signature numérique, peut s'avérer, dans certains cas, véritablement fastidieux car le calcul d'une telle signature est significativement long, ce qui est un second inconvénient.

La présente invention a pour but de remédier aux divers inconvénients propres à l'utilisation, dans certains cas, des techniques de protection d'intégrité de l'art antérieur connues et propose un procédé dans lequel une seule clé publique est utilisée, celle du serveur, qui permet à un client non muni ou ne désirant pas se servir d'une clé propre de vérifier si l'intégrité d'une requête qu'il a émise a bien été conservée et ceci, dans un temps réduit et de manière aisée et efficace.

Pour cela, le procédé de vérification de la conservation de l'intégrité d'une requête émise sans protection par un client vers un serveur tel que mentionné dans le préambule est remarquable en ce que, le client émet, ensemble avec sa requête, un drapeau spécifiant si le serveur doit ou ne doit pas offrir une garantie de non-répétition ainsi qu'un nombre unique, c'est-à-dire ne se répétant jamais ou ayant une probabilité infime de répétition (par exemple de l'ordre de 2 ^{- 64}), consistant, soit en un nombre aléatoire avec une probabilité infime de répétition soit en la concaténation d'une indication de temps et d'un nombre aléatoire avec une certitude de non-répétition, la vérification de ladite intégrité étant alors réalisée lors de la réception de la réponse à la requête (et non lors de la réception de la requête), la réponse globale incluant pour cela la réponse à la requête mais aussi le résultat d'une fonction de compression non inversible appliquée à l'ensemble requête, drapeau et nombre unique (appelé "condensé du message"), la réponse globale étant en outre protégée en intégrité au moyen de la clé du serveur.

Ainsi, selon l'idée de l'invention et grâce à la technique employée, une seule clé, celle du serveur, est nécessaire pour permettre à un client anonyme de s'assurer qu'une requête qu'il a émise n'a pas été modifiée durant son transit et si cela a été le cas d'en être informé, le fait que le serveur qui reçoit la requête ne soit pas en mesure de vérifier que ladite requête n'a pas été modifiée n'ayant aucune importance dans le contexte d'une requête émise par un client anonyme. Ce procédé simple à mettre en oeuvre est en outre efficace et rapide relativement aux techniques de l'art antérieur car, de toute évidence, effectuer un calcul en appliquant la fonction de compression non inversible à la requête incluant le drapeau et le nombre unique est une opération considérablement moins longue que celle qui consiste à effectuer le calcul d'une signature numérique. De manière connue, les fonctions de compression non inversibles, appelées "hash functions" par l'homme du métier, utilisent couramment les algorithmes MD4 ("Message Digest algorithm"), MD5 ou encore SHA ("Secure Hash Algorithm"). En outre, l'utilisation d'un nombre unique incluant une indication de temps et un nombre aléatoire permet d'offrir une protection sûre relativement à toute tentative de "rejeu" de la part d'un intrus voulant se faire passer, vis-à-vis du client, pour le serveur authentique. Le "rejeu" ou attaque par "rejeu" (connue aussi sous le nom "replay attack" par l'homme du métier) est une attaque dite active, c'est-à-dire fondée sur l'injection frauduleuse d'informations, après capture sur le réseau subséquemment à une "écoute".

La clé du serveur permettant de protéger en intégrité la réponse globale peut être obtenue de différentes manières. La présente invention couvre, de préférence, deux variantes, selon que le serveur dispose d'une clé de signature ou d'une clé de chiffrement.

Selon la première variante, de manière caractéristique, la réponse globale est signée à l'aide de la clé privée de signature du serveur, cette dernière étant, à la réception de la réponse globale, vérifiée par le client à l'aide de la clé publique de signature du serveur.

De manière également caractéristique, selon la seconde variante, lors de l'envoi de la requête, du drapeau et du nombre unique, une donnée supplémentaire est adjointe, cette donnée contenant une clé de scellement chiffrée sous la clé publique de chiffrement du serveur, ladite clé de scellement étant déchiffrable par le serveur à l'aide de la clé privée de déchiffrement correspondante et étant alors utilisée par le serveur pour le scellement de la réponse globale, le client vérifiant alors, à la réception de la réponse globale, ledit scellement.

Il est remarquable de constater que, dans le cas de la seconde variante, la donnée supplémentaire adjointe à la requête, au drapeau et au nombre unique peut être réutilisée à l'identique pour un grand nombre de requêtes et non pour une requête seulement. Le client n'a en fait à effectuer qu'une seule fois le chiffrement de la clé de scellement sous la clé publique du serveur, car il peut mémoriser localement le résultat du chiffrement et la clé de scellement associée et réutiliser ces valeurs autant de fois que nécessaire. Ceci permet d'augmenter les performances du système du côté du client. De son côté, le serveur peut ou non mémoriser le résultat du déchiffrement. Si ce résultat est mémorisé, l'opération de déchiffrement effectuée par le serveur peut alors être omise, excepté lors de la première réception d'une nouvelle clé de scellement. Il suffit en effet de gérer une table associant les données supplémentaires reçues avec chaque valeur de la clé de scellement associée et obtenue lors du déchiffrement du premier message contenant cette donnée supplémentaire. Si la donnée supplémentaire reçue figure déjà dans cette table, alors une simple lecture fournit la clé de scellement à utiliser par le serveur. Si la donnée supplémentaire reçue ne figure pas déjà dans cette table, alors elle peut y être ajoutée associée à la clé de scellement obtenue après le déchiffrement. Ceci permet d'augmenter les performances du système du côté du serveur. Un système à base de "cache" (antémémoire) simple, c'est-à-dire du côté du client seulement, ou double, c'est-à-dire à la fois du côté du client et du serveur, peut ainsi être mis en oeuvre.

Selon le procédé de vérification de la conservation de l'intégrité d'une requête émise, de manière caractéristique, lorsque le client émet ,sa requête il décide au préalable s'il souhaite que la non-duplication du nombre unique soit ou non strictement garantie par le serveur. Pour cela, il adjoint à sa requête d'une part le drapeau spécifiant si le serveur doit ou ne doit pas offrir cette garantie et d'autre part le nombre unique qu'il a formé, puis il effectue un calcul en appliquant la fonction de compression non inversible à l'ensemble requête, drapeau et nombre unique, calcul qu'il mémorise localement. Ensuite, lorsque le serveur reçoit la requête, et si le client a spécifié qu'il désirait être absolument sûr que le "rejeu" soit impossible, ledit serveur teste s'il est en mesure de garantir la non-duplication du nombre unique. S'il n'est pas en mesure de le faire, il le signale par un drapeau différent lors de la réponse, sinon, il vérifie qu'il n'a pas déjà reçu ledit nombre unique, puis émet un message d'erreur si le nombre unique a déjà été reçu, ou, dans le cas contraire, effectue alors un calcul en appliquant la fonction de compression non inversible à l'ensemble requête, drapeau et nombre unique reçu et inclut dans sa réponse ce calcul, la réponse globale étant protégée en intégrité au moyen de la clé du serveur. Enfin, lorsque le client reçoit cette réponse, il vérifie d'abord si le calcul qu'il a mémorisé correspond effectivement au calcul émis par le serveur et, si c'est le cas, vérifie alors la signature numérique ou le scellement selon la variante utilisée. La conservation de l'intégrité de la requête préalablement émise est constatée lorsque le calcul et l'intégrité sont vérifiés. Il est toutefois à noter que l'ordre des opérations de vérification peut techniquement être inversé, cependant, l'ordre ici indiqué offre les meilleures performances car les calculs courts sont effectués en tête.

De cette façon, de manière aisée, le client peut être assuré que sa requête n'a pas été modifiée et que la réponse reçue correspond bien à la requête qu'il a émise ainsi qu'à la garantie de protection demandée concernant le "rejeu" et donc, que cette réponse ne peut être le "rejeu" d'une réponse précédemment envoyée par ce même serveur et ce, même pour une requête identique. Il est en outre ici utile d'insister sur le fait que, conformément à l'idée du procédé selon l'invention, le client n'a besoin d'aucune clé qui lui soit propre, seule la connaissance d'une ou plusieurs clés publiques lui est nécessaire.

Pour une meilleure appréhension de l'idée de l'invention, la description suivante, qui n'est bien entendu pas limitative, fera bien comprendre dans quel environnement l'invention s'insère et comment elle peut être réalisée. Pour cela deux applications pratiques mettant en oeuvre la technique enseignée selon l'invention sont ci-après exposées.

La première application concerne un utilisateur requérant qui, ne possédant aucune clé et désirant faire enregistrer sa clé publique auprès d'une autorité, veut obtenir la garantie que la clé qui a été reçue par ladite autorité pour être enregistrée est bien celle qu'il a envoyée. Dans cette application, il faut assimiler le requérant au client et l'autorité d'enregistrement des clés au serveur. Le but fixé ici est en fait de permettre à un nouvel utilisateur ou un installateur, le requérant, d'installer une clé publique qui lui est propre et de se faire connaître auprès d'une autorité en s'assurant que la clé est parvenue sans altération auprès de cette autorité et que de plus l'autorité est garantie que cette clé a bien été émise par ce requérant et ceci sans jamais manipuler d'informations secrètes. Conformément à l'idée de l'invention, le requérant, en outre, connaît la clé publique de l'autorité d'enregistrement, cette connaissance lui offre deux possibilités, soit de vérifier une signature produite par l'autorité d'enregistrement, soit de chiffrer une information pour l'autorité d'enregistrement et pour elle seulement. Seule la première variante est dans cet exemple utilisée. Le requérant émet sa requête vers l'autorité d'enregistrement et va donc lui envoyer, sans protection, sa clé publique (qu'il désire faire enregistrer), son identité (associée à cette clé publique qui lui est propre), un drapeau (de valeur fixe) et son nombre unique (constitué de préférence mais de manière non limitative de 64 bits, par exemple de la date d'envoi et d'un temps de conservation de la requête précis sur 32 bits ainsi que d'un nombre aléatoire sur 32 bits). Ensuite, le requérant effectue un calcul en appliquant une fonction de compression non inversible (la même, MD4, MD5 ou SHA, que celle qui sera utilisée par l'autorité d'enregistrement) à l'ensemble de la requête, calcul qu'il mémorise localement. L'autorité d'enregistrement recevant cette requête vérifie que le nombre unique n'a pas déjà été reçu puis dans ce cas en réponse, va accuser réception de cette demande d'enregistrement et, par exemple, envoyer un numéro d'enregistrement attestant que la requête a bien été reçue ainsi que le résultat du calcul effectué en appliquant la fonction de compression non inversible à la requête globale reçue, l'ensemble étant signé avec la clé privée de l'autorité d'enregistrement. A la réception de cette réponse, le requérant vérifie d'une part si le calcul qu'il a mémorisé localement correspond effectivement au calcul émis par le serveur et si c'est le cas vérifie ensuite, puisqu'il possède la clé publique de l'autorité d'enregistrement, la signature de ladite autorité d'enregistrement. Si le calcul et la signature sont vérifiés, le requérant est alors assuré que l'intégrité de la requête préalablement émise a été conservée et que l'autorité d'enregistrement l'a bien reçue et enregistrée avec son identité sous le numéro d'enregistrement reçu.

A cet instant, le requérant sait que sa requête a été enregistrée sans altération par l'autorité d'enregistrement et que cette dernière connaît donc les informations relatives au couple clé publique et identité du requérant. Cependant, l'autorité d'enregistrement a également enregistré la date à laquelle la requête a été émise et le temps pendant lequel elle doit conserver cette requête et si rien ne se passe, à la fin de ce temps les informations enregistrées seront supprimées. Le requérant qui a reçu et connaît le numéro d'enregistrement va alors, et ceci avant que le temps de conservation de la requête ne soit écoulé, par exemple téléphoner à l'administrateur de l'autorité d'enregistrement et confirmer simplement en donnant son identité et le numéro d'enregistrement reçu pour demander à l'administrateur la validation des informations reçues. Cette technique présente donc un avantage certain de simplicité car les informations que le requérant confirme sont simplement le numéro d'enregistrement qui lui a été communiqué par l'autorité d'enregistrement et son identité et non la valeur de la clé publique qui est complexe et par nécessité excessivement longue (généralement plusieurs lignes) et dont, par conséquent, la probabilité d'insertion d'erreurs serait élevée lors de la transmission ou de la réception de l'information par exemple lors d'une conversation téléphonique. Pour effectuer la validation de l'information reçue et donc enregistrée, l'administrateur n'a pas besoin de taper le moindre message, il lui suffit de cliquer à l'aide d'une souris sur l'écran le numéro d'enregistrement inscrit correspondant à celui qui vient de lui être communiqué. Ainsi, pour installer une clé, les informations qui circulent entre le requérant et l'autorité d'enregistrement sont, relativement à toute autre méthode, très courtes et non confidentielles. De plus, les. numéros utilisés peuvent être réutilisés assez rapidement, dès que le temps de conservation est écoulé, ce qui évite de manipuler des numéros trop longs.

La seconde application s'intègre particulièrement bien à un système d'administration d'objets, appelé également gestionnaire d'objets par l'homme du métier, utilisant un protocole administratif, par exemple le protocole SNMP (Simple Network Management Protocol). Dans cet exemple d'application, un gestionnaire SNMP envoie une requête vers un agent SNMP pour récupérer des informations publiques, ce gestionnaire SNMP, toutefois, désirant s'assurer que la réponse renvoyée par cet agent SNMP correspond bien à la demande contenue dans la requête qu'il a envoyée. Dans cette application, il faut assimiler le gestionnaire SNMP au client et l'agent SNMP au serveur. A cet endroit, sont présentés, de manière succinte, quelques rappels qui permettront de mieux appréhender l'environnement dans lequel s'insère cette application. Un gestionnaire d'objets est chargé d'administrer différentes ressources informatiques telles que, par exemple, un système informatique, un élément de réseau ou tout simplement un logiciel applicatif. Pour cela un dialogue est établi par l'intermédiaire d'un protocole administratif standard déterminé et au travers du réseau, au moyen de requêtes émises par le gestionnaire vers les ressources informatiques et de réponses à ces requêtes rendues par les ressources informatiques concernées vers le système d'administration. Pour autoriser ce dialogue, sur chaque ressource informatique est implanté un dispositif de traitement de l'information spécialement prévu pour faciliter l'exécution de cette tâche. Ce dispositif est en fait le correspondant du gestionnaire d'objets sur l'équipement supportant la ressource informatique à administrer. Ces dispositifs sont de différentes natures, suivant le modèle d'objets administratifs qu'ils supportent et le protocole administratif qu'ils utilisent pour communiquer avec le système d'administration. Dans le présent exemple, un tel dispositif correspond à l'agent SNMP qui est décrit dans le document, "Simple Network Management Protocol. Internet Working Group Request for Comments 1157. May 1990", et qui utilise le modèle d'objets et le protocole administratif définis par l'I.E.T.F. (Internet Engineering Task Force). De manière plus précise, les agents SNMP supportent des objets administratifs normalisés par l'I.E.T.F. et/ou des objets dits privés, caractérisés par les fournisseurs des ressources à administrer (constructeurs d'équipement, développeurs de logiciels, etc...). Le protocole SNMP utilisé par les agents SNMP a été conçu pour ne fournir que des moyens de gestion de base reposant d'une part sur un service d'administration limité n'utilisant que quatre fonctions primitives (GET, SET, GET-NEXT, TRAP) et d'autre part sur un modèle d'objet simple. En outre, la fonction la plus utilisée (de l'ordre de 90%) est la fonction GET permettant de lire, c'est-à-dire de récupérer de l'information auprès d'un agent SNMP. Deux types de contrôles effectués lors de l'application d'une fonction GET par un agent peuvent être distingués: un contrôle d'accès permettant de ne fournir les informations demandées qu'aux requérants autorisés ou bien une absence de contrôle pour les accès aux informations publiques. C'est précisément ce cas qui est concerné par cette seconde avantageuse application. Certaines techniques requièrent lors de l'émission d'une requête la signature du gestionnaire et lors de la réponse à cette requête la signature de l'agent, ceci est parfaitement essentiel pour l'utilisation d'une fonction SET tandis qu'avec une fonction GET, de loin la plus utilisée, la présente technique, avec laquelle une seule signature est nécessaire, est particulièrement bien adaptée et représente un important gain en performance.

Dans ce cas, l'idée est que le gestionnaire veut s'assurer que la réponse reçue est bien liée à sa requête, qu'elle est bien celle de l'agent destinataire et qu'elle n'est pas un "rejeu". Dans cette seconde application donc, également selon une des caractéristiques de l'invention la requête qui inclut un drapeau et un nombre unique (constitué de préférence mais de manière non limitative de 64 bits, par exemple de la date d'envoi et d'un nombre aléatoire sur 32 bits), est émise sans protection par le gestionnaire alors qu'ensuite un calcul est effectué en appliquant une fonction de compression non inversible (la même, MD4 ou MD5, que celle qui sera utilisée par l'agent SNMP) à l'ensemble de la requête, calcul qui est mémorisé localement. L'agent recevant cette requête vérifie que le nombre unique n'a pas déjà été reçu puis dans ce cas, envoie en réponse les informations demandées associées à la requête ainsi que le résultat du calcul effectué en appliquant la fonction de compression non inversible à la requête globale reçue, l'ensemble étant signé avec sa clé de signature. A la réception de cette réponse, le gestionnaire vérifie d'une part si le calcul qu'il a mémorisé localement correspond effectivement au calcul émis par l'agent et si c'est le cas vérifie ensuite, puisqu'il possède la clé publique de l'agent, la signature dudit agent. Si le calcul et la signature sont vérifiés, le gestionnaire est alors assuré que l'intégrité de la requête préalablement émise a été conservée, que l'agent l'a bien reçue et que cette réponse est bien celle escomptée et n'est pas un "rejeu" d'une information ancienne.

Pour conclure, selon l'idée de l'invention et grâce à la technique employée une seule signature, celle du serveur, est nécessaire pour permettre à un client de s'assurer qu'une requête qu'il a émise n'a pas été modifiée durant son transit et si cela a été le cas d'en être informé, ceci sans que le serveur ne sache nécessairement si l'information reçue a été modifiée. Cette technique est véritablement nouvelle car habituellement, c'est le serveur qui vérifie la conservation de l'intégrité de l'information et assure le client que ladite information n'a pas été falsifiée. Ce procédé simple à mettre en oeuvre est en outre efficace et rapide relativement aux techniques de l'art antérieur car, de toute évidence, effectuer un calcul en appliquant une fonction de compression non inversible à une requête incluant un drapeau et un nombre unique est une opération considérablement moins longue que celle qui consiste à effectuer le calcul d'une signature numérique lorsque l'utilisation d'un mécanisme d'intégrité directe sur la requête est employé. Si la modification de la requête émise est facilement décelable lors de la vérification de l'identité du calcul mémorisé avec le calcul émis par le serveur, la falsification de l'information lors de la transmission de la réponse peut être également aisément détectée par le client à la réception de ladite réponse du fait de la vérification de la signature du serveur. En outre, l'utilisation d'un nombre unique incluant une indication de temps et un nombre aléatoire permet d'offrir une protection puissante relativement à toute tentative de falsification sachant que la probabilité pour que deux clients choisissent le même nombre de manière accidentelle est infiniment faible alors que dans le cas présent où ce choix est délibéré, la probabilité est égale à un.

## Revendications

1. Procédé de vérification de la conservation de l'intégrité d'une requête émise sans protection par un client vers un serveur, une seule clé de signature étant utilisée, celle du serveur, caractérisé en ce que le client émet, ensemble avec sa requête, un drapeau spécifiant si le serveur doit ou ne doit pas offrir une garantie de non-répétition ainsi qu'un nombre unique, c'est-à-dire ne se répétant jamais ou ayant une probabilité infime de répétition, consistant, soit en un nombre aléatoire avec une probabilité infime de répétition soit en la concaténation d'une indication de temps et d'un nombre aléatoire avec une certitude de non-répétition, la vérification de ladite intégrité étant alors réalisée lors de la réception de la réponse à la requête, la réponse globale incluant pour cela la réponse à la requête mais aussi le résultat d'une fonction de compression non inversible appliquée à l'ensemble requête, drapeau et nombre unique, la réponse globale étant en outre protégée en intégrité au moyen de la clé du serveur.

2. Procédé de vérification de la conservation de l'intégrité d'une requête émise selon la revendication 1, caractérisé en ce que, selon une première variante la réponse globale est signée à l'aide de la clé privée de signature du serveur, cette dernière étant, à la réception de la réponse globale, vérifiée par le client à l'aide de la clé publique de signature du serveur.

3. Procédé de vérification de la conservation de l'intégrité d'une requête émise selon la revendication 1, caractérisé en ce que, selon une seconde variante, lors de l'envoi de la requête, du drapeau et du nombre unique, une donnée supplémentaire est adjointe, cette donnée contenant une clé de scellement chiffrée sous la clé publique de chiffrement du serveur, ladite clé de scellement étant déchiffrable par le serveur à l'aide de la clé privée de déchiffrement correspondante et étant alors utilisée par le serveur pour le scellement de la réponse globale, le client vérifiant alors, à la réception de la réponse globale, ledit scellement.

4. Procédé de vérification de la conservation de l'intégrité d'une requête émise selon l'une des revendications 1 à 3, caractérisé en ce que, lorsque le client émet sa requête, il décide au préalable s'il souhaite que la non-duplication du nombre unique soit ou non strictement garantie par le serveur, pour cela, il adjoint à sa requête d'une part le drapeau spécifiant si le serveur doit ou ne doit pas offrir cette garantie et d'autre part le nombre unique qu'il a formé, puis il effectue un calcul en appliquant la fonction de compression non inversible à l'ensemble requête, drapeau et nombre unique, calcul qu'il mémorise localement, alors que, lorsque le serveur reçoit la requête, et si le client a spécifié qu'il désirait être absolument sûr qu'un "rejeu" soit impossible, ledit serveur teste s'il est en mesure de garantir la non-duplication du nombre unique, s'il n'est pas en mesure de le faire, il le signale par un drapeau différent lors de la réponse, sinon, il vérifie qu'il n'a pas déjà reçu ledit nombre unique, puis émet un message d'erreur si le nombre unique a déjà été reçu, ou, dans le cas contraire, effectue alors un calcul en appliquant la fonction de compression non inversible à l'ensemble requête, drapeau et nombre unique reçu et inclut dans sa réponse ce calcul, la réponse globale étant protégée en intégrité au moyen de la clé du serveur, tandis que le client recevant cette réponse vérifie d'abord si le calcul qu'il a mémorisé correspond effectivement au calcul émis par le serveur et, si c'est le cas, vérifie alors la signature numérique ou le scellement selon la variante utilisée, la conservation de l'intégrité de la requête préalablement émise étant constatée lorsque le calcul et l'intégrité sont vérifiés.

5. Procédé de vérification de la conservation de l'intégrité d'une requête émise selon les revendications 2 ou 4, utilisé dans le cas d'application où un client ne possédant aucune clé désire faire enregistrer sa clé publique et se faire connaître auprès d'un serveur agissant comme autorité d'enregistrement de clés, caractérisé en ce que, le client, connaissant la clé publique de l'autorité d'enregistrement de clés, émet, sans protection, vers l'autorité d'enregistrement sa requête constituée de la clé publique à enregistrer, de son identité, d'un drapeau et d'un nombre unique, tandis qu'il effectue un calcul en appliquant une fonction de compression non inversible à l'ensemble de la requête, calcul qu'il mémorise localement, l'autorité d'enregistrement recevant cette requête vérifie que le nombre unique n'a pas déjà été reçu et dans ce cas accuse réception de cette demande d'enregistrement en envoyant en réponse un numéro d'enregistrement de cette requête ainsi que le résultat du calcul effectué en appliquant la fonction de compression non inversible à la requête globale reçue, l'ensemble étant signé avec la clé privée de l'autorité d'enregistrement alors qu'à la réception de cette réponse, le client vérifie d'une part si le calcul qu'il a mémorisé localement correspond effectivement au calcul émis par le serveur et, si c'est le cas vérifie la signature de ladite autorité d'enregistrement, si le calcul et la signature sont vérifiés, le client est alors assuré que l'intégrité de la requête préalablement émise a été conservée et que cette requête a été enregistrée avec son identité sous le numéro d'enregistrement reçu et qu'il peut la faire valider en ne communiquant aucune valeur à caractère confidentiel.

6. Procédé de vérification de la conservation de l'intégrité d'une requête émise selon les revendications 2 ou 4, caractérisé en ce que, dans un système d'administration d'objets utilisant le protocole SNMP (Simple Network Management Protocol), un client qui est un gestionnaire SNMP envoie une requête vers un serveur correspondant à un agent SNMP pour récupérer des informations publiques en s'assurant que la réponse renvoyée par cet agent SNMP correspond bien à la demande contenue dans la requête qu'il a envoyée, la requête incluant un drapeau et un nombre unique étant émise sans protection par le gestionnaire alors qu'ensuite un calcul est effectué en appliquant une fonction de compression non inversible à l'ensemble de la requête, calcul qui est mémorisé localement, tandis que l'agent recevant cette requête vérifie que le nombre unique n'a pas déjà été reçu puis dans ce cas, envoie en réponse les informations demandées associées à la requête ainsi que le résultat du calcul effectué en appliquant la fonction de compression non inversible à la requête globale reçue, l'ensemble étant signé avec sa clé de signature, puis à la réception de cette réponse, le gestionnaire vérifie d'une part si le calcul qu'il a mémorisé localement correspond effectivement au calcul émis par l'agent et si c'est le cas vérifie ensuite, puisqu'il possède la clé publique de l'agent, la signature dudit agent, si le calcul et la signature sont vérifiés, le gestionnaire étant alors assuré que l'intégrité de la requête préalablement émise a été conservée, que l'agent l'a bien reçue et que cette réponse est bien celle escomptée.
